# EUROPEAN PATENT SPECIFICATION

(11) **EP 3 795 324 B1**
(45) Date of publication and mention of the grant of the patent: **28.06.2023**
(21) Application number: 19197966.5
(22) Date of filing: 18.09.2019
(51) Int. Cl.: B29C 45/14, B29C 45/16, B60J 10/78, B60J 10/265, B29L 31/30

(54) **METHOD AND DEVICE TO PRODUCE A WINDOW SURROUND FOR A VEHICLE AND WINDOW SURROUND FOR A VEHICLE**
VERFAHREN UND VORRICHTUNG ZUR HERSTELLUNG EINES FENSTERRAHMENS FÜR EIN FAHRZEUG UND FENSTERRAHMEN FÜR EIN FAHRZEUG
PROCÉDÉ ET DISPOSITIF POUR LA FABRICATION D'UNE BORDURE DE FENÊTRE POUR UN VÉHICULE ET BORDURE DE FENÊTRE POUR UN VÉHICULE

(43) Date of publication of application: 24.03.2021
(73) Proprietor: Magna Engineered Glass Europe S.à.r.l., 52200 Humes Jorquenay (FR)
(72) Inventor: FEBVAY, Patrick, 52200 Langres (FR); BANASIEWICZ, Kévin, 52200 Champigny les Langres (FR)
(74) Representative: Zangger, Bernd

(56) References cited:
- WO-A1-2006/067622
- WO-A1-2018/172194
- DE-A1-102009 031 006
- US-A- 4 953 331
- US-A1- 2003 205 918
- US-A1- 2008 191 517
- US-A1- 2012 144 751
- US-A1- 2019 232 769
- US-B1- 6 250 017

## Description

### TECHNICAL FIELD

The invention relates to a window surround for a vehicle, a method to produce a window surround and a device for producing a window surround.

### BACKGROUND

Window surrounds, encapsulating glass panels, are used, together with the inserted glasses, as windows in vehicles and are generally known in the art.

The window surround is typically bonded to the window glass via a primer. Said differently, the window surround usually bonds to a primer, which is bonded to the glass, thereby bonding the window surround to the glass panel.

Meanwhile it is also known to construct vehicle windows without using primer. The glass is then held by form-fit, typically on three sides at the edges of the glass panel, in a frame-like manner.

It is also known that such window surrounds can be constructed using two different materials, a hard, more rigid, material that serves as a support frame to hold the glass panel by form-fit. And a second, less rigid material, that serves as a sealing to the further surrounding area of the window surround.

Such window surrounds are often produced by extrusion, but it is also known to use injection-molding techniques.

Injection-molded window surrounds are revealed for example by DE 195 39 960 A1.

From DE 298 23 612 U1 it is known, that a trim strip can be attached to a window surround using form fit.

US 2012/144751 A1 reveals a pane unit for windows on motor vehicles and the like, with a first pane, with a frame which has a multi-part frame profile with at least one secondary part as a soft component and engages on a margin of the pane on at least two sides of the pane, the frame surrounding at least two end faces of the pane or annularly surrounding the pane so as to be closed on itself, and with a guide web for guiding a second pane which is movable up and down and is arranged towards the first pane, wherein a reception region for a panel element is provided on the frame so as to point towards the outside of a body. The panel element is designed as an introduction part and is at least partially injection-moulded around by the secondary part and is also fixed with respect to the guide web.

### SUMMARY

It is an object of the invention to specify an improved method to produce a window surround, an improved window surround and a device that is suitable to produce such improved window surrounds. In particular, the window surround shall be equipped with a trim strip in a simple and cost effective manner.

The object of the invention is achieved by a method to produce a window surround for a vehicle, wherein the window surround comprises a first component made of a hard first material and a second component made of a weak second material, wherein the weak second material is a thermoplastic elastomer (TPE), wherein the first component constitutes a circumferential support frame for holding a window glass, wherein the second component constitutes a circumferential sealing element, wherein the first and second component are produced by multi-component injection molding, wherein after injection molding of the first component onto the window glass, the second component is molded over the first component, wherein after injection molding of the first component onto the window glass, before or after the second component is molded over the first component, a third component is molded over the first component, wherein the third component is made of a high gloss material.

According to the invention a three component (3K) injection process is performed to build a window surround for a vehicle.

The first component of the window surround is adapted to hold the glass panel circumferentially. The holding of the glass panel is achieved by a form-fit and usually includes that the glass is clamped between the outer edges of the first component support frame.

Since the first component of the window surround has to hold the glass panel, it has usually essentially the shape of a ring, which surrounds the window-glass.

The first component gets injection molded onto the window glass in a first step of the 3K injection process.

A second component constitutes a circumferential sealing element. The second component is made from a material that is less hard than the material of the first component. The second component gets molded over the first component in a second step of the 3K injection process.

According to the invention, a third component is molded over the first component, wherein the third component is made of a high gloss material. The third component serves as a trim strip for the window surround. Therefore, the third component is made of a high gloss, preferentially black, material. The third component is made preferentially of a material that is harder than the second material.

According to the invention, the third component is molded over the first component, before or after the second component is molded over the first component. Therefore, the component that is made of high gloss material, and therefore preferentially builds a trim strip of the window surround, is simply over molded in a second or third shot over the hard first component.

Further advantageous embodiments and developments of the invention will become apparent from the dependent claims and from the description when considered together with the figures.

Preferably the third component is made of Polymethylmethacrylate (PMMA) or of Alpha-Methylstyrene Acrylonitrile (AMSAM), for example Luran^{®} High Heat HH-120.

Preferably the first component comprises Polypropylene (PP), preferentially the first component is Polypropylene with 30 percent glass fibre (PPGF30%), and/or the second component is a thermoplastic elastomer (TPE).

It is advantageous if at least one undercut or at least two undercuts are formed in the first component, and the third component is molded over the first component in the section of the undercut or undercuts, so that the third component fills the undercut or undercuts of the first component.

It is particularly advantageous if the at least one undercut is arranged directly adjacent the window glass, so that the third component which fills the undercut of the first component gets in direct contact with the window glass.

It is furthermore advantageous if at least in a first section of the third component the third component is molded over the first component and the second component is molded over the third component. The third component therefore gets clamped between the first and second component.

It is advantageous if first component is formed with a u-shaped cross-section, wherein the window-glass penetrates the underline of the u-shape from the outside, such that the u-shape of the first component continues the plane of the window-glass.

Preferably the first component is formed with a u-shaped cross-section and the third component and/or the second component is molded over the first component in a shape that embraces an end of the U-shape.

According to the invention, a window surround for a vehicle comprises a first component made of a hard first material and a second component made of a weak second material, wherein the weak second material is a thermoplastic elastomer (TPE), wherein the first component constitutes a circumferential support frame for holding a window glass, wherein the second component constitutes a circumferential sealing element, wherein the first and second component are produced by multi-component injection molding, wherein after injection molding of the first component onto the window glass, the second component is molded over the first component and the window glass, wherein a third component is molded over the first component, wherein the third component is made of a high gloss material.

Preferably at least one undercut is formed in the first component, and the third component is molded over the first component in the section of the undercut, so that the third component fills the undercut of the first component.

It is advantageous if the at least one undercut is arranged directly adjacent the window glass, so that the third component which fills the undercut of the first component is in direct contact with the window glass.

It is advantageous if at least a first section of the third component is clamped between a section of the first component and a section of the second component.

It is furthermore advantageous if the first component has a u-shaped cross-section, wherein the window-glass penetrates the underline of the u-shape from the outside, such that the u-shape of the first component continues the plane of the window-glass.

Preferably the first component is formed with a u-shaped cross-section and the third component and/or the second component is molded over the first component in a shape that embraces an end of the U-shape.

The object of the invention is also achieved by a device for producing a window surround for a vehicle, wherein the window surround comprises a first component made of a hard first material and a second component made of a weak second material, wherein the weak second material is a thermoplastic elastomer (TPE), wherein the first component constitutes a circumferential support frame for holding a window glass, wherein the second component constitutes a circumferential sealing element, wherein a third component is molded over the first component, wherein the third component is made of a high gloss material, wherein the device comprises a first cavity with a first injection unit for injection molding the first component onto the window glass and the device comprises a second cavity with a second injection unit for over molding the second component onto the first component and with a third injection unit for over molding the third component onto the first component.

The device comprises preferably a robot that is adapted to insert the window glass into the first cavity and/or to remove the glass with the first component from the first cavity and/or to insert the window glass with the first component into the second cavity and/or to remove the glass with the first and second component from the second cavity and the mold.

### DRAWINGS

The present invention is explained in greater detail below with reference to the illustrative embodiments given in the schematic figures of the drawing, in which:
- Fig. 1: shows a window surround according to the invention together with an inserted window glass in a side view;
- Fig. 2: shows an exploded view of a window surround with an inserted window glass according to Fig. 1;
- Fig. 3: show a cross section of a window surround with an inserted window glass in a first embodiment according to the invention;
- Fig. 4: show a cross section of a window surround with an inserted window glass in a second embodiment according to the invention;

### DESCRIPTION

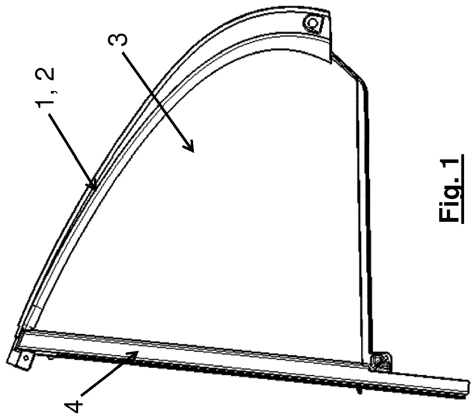

Fig. 1 shows the first component 1 of a window surround according to the invention together with an inserted window glass 3 in a side view (as could be seen from the side of a vehicle in an installation condition).

The window surround comprises the first component 1 made of a hard first material, namely Polypropylene (PP or PP with GF), advantageously Polypropylene with 30 percent glass fibre (PPGF30%), and a second component 2 made of a weak second material, namely a thermoplastic elastomer (TPE family), for example TPE TC6 WEZ 65ShA, that is over molded over the first component 1.

The first component 1 constitutes a circumferential support frame for holding the window glass 3. The first component 1 is injection molded onto the window glass 3.

The second component 2 constitutes a circumferential sealing element.

The window surround comprises also the third component 4, which is molded over the first component 1. The third component 4 is made of a high gloss material. The third component 4 can form a trim strip of the window surround. The third component 4 is made of Polymethylmethacrylate (PMMA) or Alpha-Methylstyrene Acrylonitrile (AMSAM).

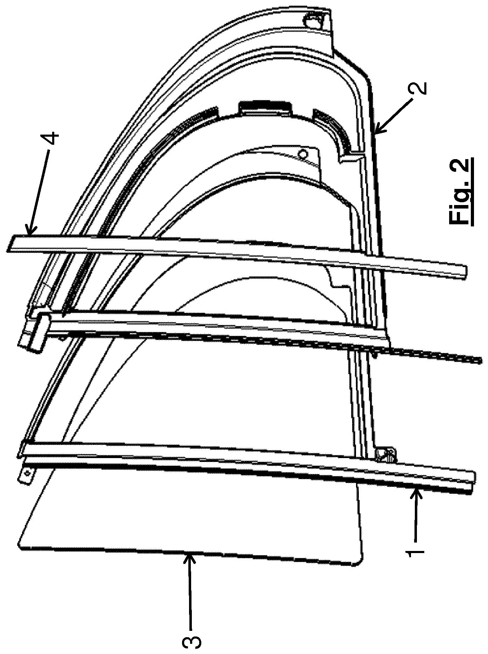

The parts that form together the window surround, namely the first, second and third component 1,2, 4, are shown separately in Fig. 2.

The third component 4 has essentially the shape of a straight bar or strip, whereas the first and second component 1, 2 have essentially frame shapes.

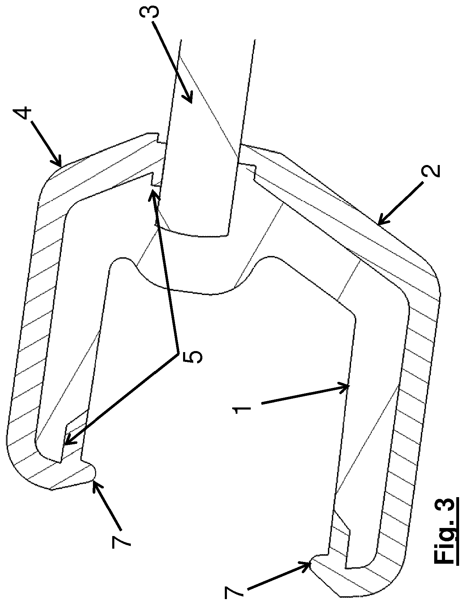

As can be seen from the cross-section Fig. 3, two undercuts (5) are formed in the first component 1, and the third component 4 is molded over the first component 1 in the section of the undercuts 5, so that the third component 4 fills the undercuts 5 of the first component 1. Therefore, each of the undercuts 5 can serve to fix the third component 4 to the first component 1.

One of the undercuts 5 (right side of Fig. 3) is arranged directly adjacent the window glass 3, so that the third component 4 which fills the undercut of the first component 1 is in direct contact with the window glass 3. The trim strip - third component 4 - extends therefore to the window glass 3 and is fixed right next to the window glass.

As can be seen in Fig. 3, the first component 1 has essentially a u-shaped cross-section, wherein the window-glass 3 penetrates the underline of the u-shape from the outside, such that the u-shape of the first component 1 continues the plane of the window-glass 3.

The third component 4 and the second component 2 are molded over the first component 1 in such a way, that each of the third and second component 4, 2 embraces an end of the U-shape. The third component 4 and/or the second component 2 each have a nose 7 in the region, where they embrace the respective ends of the u-shaped first component 1, such that each nose 7 is pointing towards the interior of the u-shape.

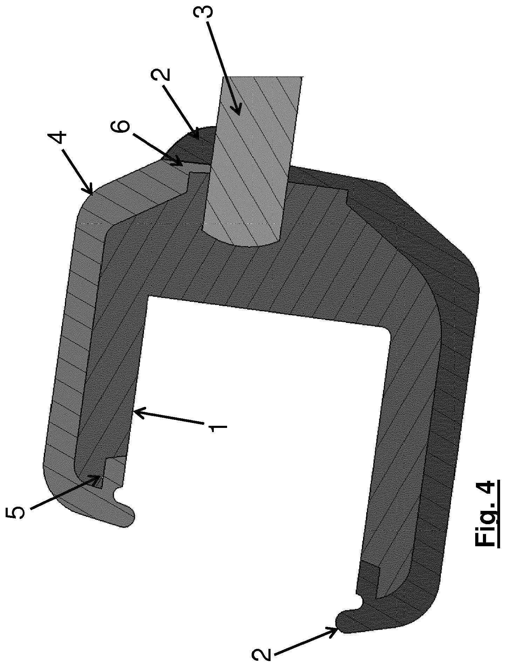

The embodiment of the window surround according to Fig. 4 differs from the embodiment shown in Fig. 3 essentially in that a first section 6 of the third component 4 is clamped between a section of the first component 1 and a section of the second component 2. Due to the molding of the second component 2 over the third component 4, the third component 4 is additionally fixed in the first section 6, between the first component 1 and the second component 2.

A window surround as shown in Fig. 1 to 4 can be produced using a device which comprises a first cavity with a first injection unit for injection molding the first component 1 onto the window glass 3 and where the device comprises a second cavity with a second injection unit for over molding the second component 2 onto the first component 1. The second cavity can comprise a third injection unit for over molding the third component 4 onto the first component 1. For producing the undercuts 5, retractable sliders can be used.

### LIST OF REFERENCE SIGNS

- 1: first component
- 2: second component
- 3: window glass
- 4: third component
- 5: undercut
- 6: first section of the third component
- 7: nose

## Claims

1. Method to produce a window surround for a vehicle, wherein the window surround comprises a first component (1) made of a hard first material and a second component (2) made of a weak second material, wherein the weak second material is a thermoplastic elastomer (TPE), wherein the first component (1) constitutes a circumferential support frame for holding a window glass (3), wherein the second component (2) constitutes a circumferential sealing element, wherein the first and second component (1, 2) are produced by multi-component injection molding, wherein after injection molding of the first component (1) onto the window glass (3), the second component (2) is molded over the first component (1),
**characterized in that** after injection molding of the first component (1) onto the window glass (3), before or after the second component (2) is molded over the first component (1), a third component (4) is molded over the first component (1), wherein the third component (4) is made of a high gloss material.

2. Method according to Claim 1,
**characterized in that** the third component (4) is made of Polymethylmethacrylate (PMMA) or Alpha-Methylstyrene Acrylonitrile (AMSAM).

3. Method according to any of the preceding Claims,
**characterized in that** the first component (1) comprises Polypropylene (PP), preferentially the first component (1) is Polypropylene with 30 percent glass fibre (PPGF30%).

4. Method according to any of the preceding Claims,
**characterized in that** at least one undercut (5) is formed in the first component (1), and the third component (4) is molded over the first component (1) in the section of the undercut (5), so that the third component (4) fills the undercut (5) of the first component (1).

5. Method according to any of the preceding Claims,
**characterized in that** at least one undercut (5) is arranged directly adjacent the window glass (3), so that the third component (4) which fills the undercut (5) of the first component (1) gets in direct contact with the window glass (3).

6. Method according to any of the preceding Claims,
**characterized in that** at least in a first section (6) of the third component (4) the third component (4) is molded over the first component (1) and the second component (2) is molded over the third component (4).

7. Method according to any of the preceding Claims,
**characterized in that** the first component (1) is formed with a u-shaped cross-section, wherein the window-glass (3) penetrates the underline of the u-shape from the outside, such that the u-shape of the first component (1) continues the plane of the window-glass (3).

8. Method according to any of the preceding Claims,
**characterized in that** the first component (1) is formed with a u-shaped cross-section, wherein the third component (4) and/or the second component (2) is molded over the first component (1) in a shape that embraces an end of the U-shape.

9. Window surround for a vehicle, wherein the window surround comprises a first component (1) made of a hard first material and a second component (2) made of a weak second material, wherein the weak second material is a thermoplastic elastomer (TPE), wherein the first component (1) constitutes a circumferential support frame for holding a window glass (3), wherein the second component (2) constitutes a circumferential sealing element, wherein the first and second component (1, 2) are produced by multi-component injection molding, wherein after injection molding of the first component (1) onto the window glass (3), the second component (2) is molded over the first component (1) and the window glass (3),
**characterized in that** a third component (4) is molded over the first component (1), wherein the third component (4) is made of a high gloss material.

10. Window surround according to Claim 9,
**characterized in that** at least one undercut (5) is formed in the first component (1), and the third component (4) is molded over the first component (1) in the section of the undercut (5), so that the third component (4) fills the undercut (5) of the first component (1).

11. Window surround according to Claim 10,
**characterized in that** the at least one undercut (5) is arranged directly adjacent the window glass (3), so that the third component (4) which fills the undercut of the first component (1) is in direct contact with the window glass (3).

12. Window surround according to any of the Claims 9 to 11,
**characterized in that** at least a first section (6) of the third component (4) is clamped between a section of the first component (1) and a section of the second component (2).

13. Window surround according to any of the Claims 9 to 12,
**characterized in that** the first component (1) has a u-shaped cross-section, wherein the window-glass (3) penetrates the underline of the u-shape from the outside, such that the u-shape of the first component (1) continues the plane of the window-glass (3).

14. Window surround according to any of the Claims 9 to 13,
**characterized in that** the first component (1) is formed with a u-shaped cross-section, wherein the third component (4) and/or the second component (2) is molded over the first component (1) in a shape that embraces an end of the U-shape.

15. Device for producing a window surround for a vehicle, wherein the window surround comprises a first component (1) made of a hard first material and a second component (2) made of a weak second material, wherein the weak second material is a thermoplastic elastomer (TPE), wherein the first component (1) constitutes a circumferential support frame for holding a window glass (3), wherein the second component (2) constitutes a circumferential sealing element, wherein a third component (4) is molded over the first component (1), wherein the third component (4) is made of a high gloss material, wherein the device comprises a first cavity with a first injection unit for injection molding the first component (1) onto the window glass (3) and the device comprises a second cavity with a second injection unit for over molding the second component (2) onto the first component (1) and with a third injection unit for over molding the third component (4) onto the first component (1). -.-.-.

## Patentansprüche

1. Verfahren zur Herstellung eines Fensterrahmens für ein Fahrzeug, wobei der Fensterrahmen eine erste Komponente (1), die aus einem harten ersten Material gefertigt ist, und eine zweite Komponente (2) umfasst, die aus einem schwachen zweiten Material gefertigt ist, wobei das schwache zweite Material ein thermoplastisches Elastomer (TPE) ist, wobei die erste Komponente (1) ein umlaufendes Tragegestell zum Halten eines Fensterglases (3) bildet, wobei die zweite Komponente (2) ein umlaufendes Dichtungselement bildet, wobei die erste und die zweite Komponente (1, 2) durch Mehrkomponentenspritzguss hergestellt werden, wobei nach dem Spritzguss der ersten Komponente (1) auf das Fensterglas (3) die zweite Komponente (2) über der ersten Komponente (1) geformt wird,
**dadurch gekennzeichnet, dass** nach dem Spritzgießen der ersten Komponente (1) auf das Fensterglas (3), bevor oder nachdem die zweite Komponente (2) über der ersten Komponente (1) geformt wird, eine dritte Komponente (4) über der ersten Komponente (1) geformt wird, wobei die dritte Komponente (4) aus einem Material mit hohem Glanz gefertigt ist.

2. Verfahren nach Anspruch 1, **dadurch gekennzeichnet, dass** die dritte Komponente (4) aus Polymethylmethacrylat (PMMA) oder α-Methylstyrol-Acrylnitril (AMSAM) gefertigt ist.

3. Verfahren nach einem der vorhergehenden Ansprüche, **dadurch gekennzeichnet, dass** die erste Komponente (1) Polypropylen (PP) umfasst, wobei die erste Komponente (1) vorzugsweise Polypropylen mit 30 Prozent Glasfaser (PPGF30%) ist.

4. Verfahren nach einem der vorhergehenden Ansprüche, **dadurch gekennzeichnet, dass** in der ersten Komponente (1) mindestens eine Hinterschneidung (5) gebildet wird, und die dritte Komponente (4) über der ersten Komponente (1) in dem Segment der Hinterschneidung (5) geformt wird, so dass die dritte Komponente (4) die Hinterschneidung (5) der ersten Komponente (1) füllt.

5. Verfahren nach einem der vorhergehenden Ansprüche, **dadurch gekennzeichnet, dass** mindestens eine Hinterschneidung (5) direkt benachbart zu dem Fensterglas (3) angeordnet ist, so dass die dritte Komponente (4), welche die Hinterschneidung (5) der ersten Komponente (1) füllt, in direkten Kontakt mit dem Fensterglas (3) ist.

6. Verfahren nach einem der vorhergehenden Ansprüche, **dadurch gekennzeichnet, dass** mindestens in einem ersten Segment (6) der dritten Komponente (4) die dritte Komponente (4) über der ersten Komponente (1) geformt wird und die zweite Komponente (2) über der dritten Komponente (4) geformt wird.

7. Verfahren nach einem der vorhergehenden Ansprüche, **dadurch gekennzeichnet, dass** die erste Komponente (1) mit einem U-förmigen Querschnitt gebildet ist, wobei das Fensterglas (3) in den Unterstrich der U-Form von der Außenseite eindringt, so dass die U-Form der ersten Komponente (1) die Ebene des Fensterglases (3) fortsetzt.

8. Verfahren nach einem der vorhergehenden Ansprüche, **dadurch gekennzeichnet, dass** die erste Komponente (1) mit einem U-förmigen Querschnitt gebildet ist, wobei die dritte Komponente (4) und/oder die zweite Komponente (2) über der ersten Komponente (1) zu einer Formgebung geformt wird bzw. werden, die das Ende der U-Form umschlingt.

9. Fensterrahmen für ein Fahrzeug, wobei der Fensterrahmen eine erste Komponente (1), die aus einem harten ersten Material gefertigt ist, und eine zweite Komponente (2) umfasst, die aus einem schwachen zweiten Material gefertigt ist, wobei das schwache zweite Material ein thermoplastisches Elastomer (TPE) ist, wobei die erste Komponente (1) ein umlaufendes Tragegestell zum Halten eines Fensterglases (3) bildet, wobei die zweite Komponente (2) ein umlaufendes Dichtungselement bildet, wobei die erste und die zweite Komponente (1, 2) durch Mehrkomponentenspritzguss hergestellt werden, wobei nach dem Spritzguss der ersten Komponente (1) auf das Fensterglas (3) die zweite Komponente (2) über der ersten Komponente (1) und dem Fensterglas (3) geformt wird,
**dadurch gekennzeichnet, dass** eine dritte Komponente (4) über der ersten Komponente (1) geformt wird, wobei die dritte Komponente (4) aus einem Material mit hohem Glanz gefertigt ist.

10. Fensterrahmen nach Anspruch 9, **dadurch gekennzeichnet, dass** in der ersten Komponente (1) mindestens eine Hinterschneidung (5) gebildet ist und die dritte Komponente (4) über der ersten Komponente (1) in dem Segment der Hinterschneidung (5) geformt wird, so dass die dritte Komponente (4) die Hinterschneidung (5) der ersten Komponente (1) füllt.

11. Fensterrahmen nach Anspruch 10, **dadurch gekennzeichnet, dass** die mindestens eine Hinterschneidung (5) direkt benachbart zu dem Fensterglas (3) angeordnet ist, so dass die dritte Komponente (4), welche die Hinterschneidung der ersten Komponente (1) füllt, in direktem Kontakt mit dem Fensterglas (3) ist.

12. Fensterrahmen nach einem der Ansprüche 9 bis 11, **dadurch gekennzeichnet, dass** mindestens ein erstes Segment (6) der dritten Komponente (4) zwischen ein Segment der ersten Komponente (1) und ein Segment der zweiten Komponente (2) geklemmt ist.

13. Fensterrahmen nach einem der Ansprüche 9 bis 12, **dadurch gekennzeichnet, dass** die erste Komponente (1) einen U-förmigen Querschnitt aufweist, wobei das Fensterglas (3) in den Unterstrich der U-Form von der Außenseite eindringt, so dass die U-Form der ersten Komponente (1) die Ebene des Fensterglases (3) fortsetzt.

14. Fensterrahmen nach einem der Ansprüche 9 bis 13, **dadurch gekennzeichnet, dass** die erste Komponente (1) mit einem U-förmigen Querschnitt gebildet ist, wobei die dritte Komponente (4) und/oder die zweite Komponente (2) über der ersten Komponente (1) zu einer Formgebung geformt wird bzw. werden, die das Ende der U-Form umschlingt.

15. Vorrichtung zur Herstellung eines Fensterrahmens für ein Fahrzeug, wobei der Fensterrahmen eine erste Komponente (1), die aus einem harten ersten Material gefertigt ist, und eine zweite Komponente (2) umfasst, die aus einem schwachen zweiten Material gefertigt ist, wobei das schwache zweite Material ein thermoplastisches Elastomer (TPE) ist, wobei die erste Komponente (1) ein umlaufendes Tragegestell zum Halten eines Fensterglases (3) bildet, wobei die zweite Komponente (2) ein umlaufendes Dichtungselement bildet, wobei eine dritte Komponente (4) über der ersten Komponente (1) geformt ist, wobei die dritte Komponente (4) aus einem Material mit hohem Glanz gefertigt ist, wobei die Vorrichtung einen ersten Hohlraum mit einer ersten Spritzeinheit zum Spritzgießen der ersten Komponente (1) auf das Fensterglas (3) umfasst und die Vorrichtung einen zweiten Hohlraum mit einer zweiten Spritzeinheit zum Überformen (Overmolding) der zweiten Komponente (2) auf die erste Komponente (1) und mit einer dritten Spritzeinheit zum Overmolding der dritten Komponente (4) auf die erste Komponente (1) umfasst.

## Revendications

1. Procédé de fabrication d'une bordure de fenêtre pour un véhicule, la bordure de fenêtre comprenant un premier composant (1) constitué d'un premier matériau dur et un deuxième composant (2) constitué d'un deuxième matériau souple, le deuxième matériau souple étant un élastomère thermoplastique (TPE), le premier composant (1) constituant un cadre de support circonférentiel pour maintenir une vitre de fenêtre (3), le deuxième composant (2) constituant un élément d'étanchéité circonférentiel, le premier et le deuxième composant (1, 2) étant produits par moulage par injection multi-composants, après le moulage par injection du premier composant (1) sur la vitre de fenêtre (3), le deuxième composant (2) étant moulé sur le premier composant (1),
**caractérisé en ce qu'**après le moulage par injection du premier composant (1) sur la vitre de fenêtre (3), avant ou après le moulage du deuxième composant (2) sur le premier composant (1), un troisième composant (4) est moulé sur le premier composant (1), le troisième composant (4) étant constitué d'un matériau très brillant.

2. Procédé selon la revendication 1, **caractérisé en ce que** le troisième composant (4) est en polyméthacrylate de méthyle (PMMA) ou en alpha-méthylstyrène-acrylonitrile (AMSAM).

3. Procédé selon l'une quelconque des revendications précédentes,
**caractérisé en ce que** le premier composant (1) comprend du polypropylène (PP), de préférence le premier composant (1) est du polypropylène avec 30 pour cent de fibres de verre (PPGF30 %).

4. Procédé selon l'une quelconque des revendications précédentes, **caractérisé en ce qu'**au moins une contre-dépouille(5) est formée dans le premier composant (1), et le troisième composant (4) est moulé sur le premier composant (1) dans la section de la contre-dépouille (5), de sorte que le troisième composant (4) remplit la contre-dépouille (5) du premier composant (1).

5. Procédé selon l'une quelconque des revendications précédentes, **caractérisé en ce qu'**au moins une contre-dépouille (5) est disposée directement de manière adjacente à la vitre de fenêtre (3), de sorte que le troisième composant (4) qui remplit la contre-dépouille (5) du premier composant (1) entre en contact direct avec la vitre de fenêtre (3).

6. Procédé selon l'une quelconque des revendications précédentes, **caractérisé en ce qu'**au moins dans une première section (6) du troisième composant (4), le troisième composant (4) est moulé sur le premier composant (1) et le deuxième composant (2) est moulé sur le troisième composant (4).

7. Procédé selon l'une quelconque des revendications précédentes,
**caractérisé en ce que** le premier composant (1) est formé avec une section transversale en forme de U, la vitre de fenêtre (3) pénétrant la ligne inférieure de la forme en U depuis l'extérieur, de sorte que la forme en U du premier composant (1) continue le plan de la vitre de fenêtre (3).

8. Procédé selon l'une quelconque des revendications précédentes,
**caractérisé en ce que** le premier composant (1) est formé avec une section transversale en forme de U, le troisième composant (4) et/ou le deuxième composant (2) étant moulé sur le premier composant (1) dans une forme qui englobe une extrémité de la forme en U.

9. Bordure de fenêtre pour un véhicule, la bordure de fenêtre comprenant un premier composant (1) constitué d'un premier matériau dur et un deuxième composant (2) constitué d'un deuxième matériau souple, le deuxième matériau souple étant un élastomère thermoplastique (TPE), le premier composant (1) constituant un cadre de support circonférentiel pour maintenir une vitre de fenêtre (3), le deuxième composant (2) constituant un élément d'étanchéité circonférentiel, le premier et le deuxième composant (1, 2) étant produits par moulage par injection multi-composants, après le moulage par injection du premier composant (1) sur la vitre de fenêtre (3), le deuxième composant (2) étant moulé sur le premier composant (1) et la vitre de fenêtre (3),
**caractérisée en ce qu'**un troisième composant (4) est moulé sur le premier composant (1), le troisième composant (4) étant constitué d'un matériau très brillant.

10. Bordure de fenêtre selon la revendication 9,
**caractérisée en ce qu'**au moins une contre-dépouille (5) est formée dans le premier composant (1), et **en ce que** le troisième composant (4) est moulé sur le premier composant (1) dans la section de la contre-dépouille (5), de sorte que le troisième composant (4) remplit la contre-dépouille (5) du premier composant (1).

11. Bordure de fenêtre selon la revendication 10, **caractérisée en ce que** l'au moins une contre-dépouille (5) est agencée directement de manière adjacente à la vitre de fenêtre (3), de sorte que le troisième composant (4) qui remplit la contre-dépouille du premier composant (1) est en contact direct avec la vitre de fenêtre (3).

12. Bordure de fenêtre selon l'une quelconque des revendications 9 à 11, **caractérisée en ce qu'**au moins une première section (6) du troisième composant (4) est serrée entre une section du premier composant (1) et une section du deuxième composant (2).

13. Bordure de fenêtre selon l'une quelconque des revendications 9 à 12,
**caractérisée en ce que** le premier composant (1) a une section transversale en forme de U, la vitre de fenêtre (3) pénétrant de l'extérieur dans la ligne inférieure de la forme en U, de sorte que la forme en U du premier composant (1) continue le plan de la vitre de fenêtre (3).

14. Bordure de fenêtre selon l'une quelconque des revendications 9 à 13,
**caractérisée en ce que** le premier composant (1) est formé avec une section transversale en forme de U, le troisième composant (4) et/ou le deuxième composant (2) étant moulé sur le premier composant (1) dans une forme qui englobe une extrémité de la forme en U.

15. Dispositif de fabrication d'une bordure de fenêtre pour un véhicule, la bordure de fenêtre comprenant un premier composant (1) constitué d'un premier matériau dur et un deuxième composant (2) constitué d'un deuxième matériau souple, le deuxième matériau souple étant un élastomère thermoplastique (TPE), le premier composant (1) constituant un cadre de support circonférentiel pour maintenir une vitre de fenêtre (3), le deuxième composant (2) constituant un élément d'étanchéité circonférentiel, un troisième composant (4) étant moulé sur le premier composant (1), le troisième composant (4) étant constitué d'un matériau très brillant, le dispositif comprenant une première cavité avec une première unité d'injection pour mouler par injection le premier composant (1) sur la vitre de fenêtre (3) et le dispositif comprenant une deuxième cavité avec une deuxième unité d'injection pour surmouler le deuxième composant (2) sur le premier composant (1) et avec une troisième unité d'injection pour surmouler le troisième composant (4) sur le premier composant (1).
